# EUROPÄISCHE PATENTSCHRIFT

(11) **EP 1 666 392 B1**
(45) Veröffentlichungstag und Bekanntmachung des Hinweises auf die Patenterteilung: **22.08.2007**
(21) Anmeldenummer: 05024298.1
(22) Anmeldetag: 08.11.2005
(51) Int. Cl.: B65G 49/04

(54) **Vorrichtung und Verfahren zum Unterkühlen von Montageteilen**
Device and method for subcooling assembly parts
Dispositif et procédé de sous-refroidissement des pièces d'assemblage

(30) Priorität: 03.12.2004 DE 102004058386
(43) Veröffentlichungstag der Anmeldung: 07.06.2006
(73) Patentinhaber: Alfing Montagetechnik GmbH, 73433 Aalen (DE)
(72) Erfinder: Nigmann, Horst, 73460 Hüttlingen (DE); Stifter, Franz, 73463 Westhausen (DE)
(74) Vertreter: HOFFMANN EITLE

(56) Entgegenhaltungen:
- US-A- 4 648 777

## Beschreibung

### Technisches Gebiet

Die vorliegende Erfindung betrifft eine Vorrichtung und ein Verfahren zum Unterkühlen von Montageteilen.

In der Montagetechnik stellt sich häufig die Aufgabe, Montageteile in in einem Werkstück ausgebildete Ausnehmungen einzupressen. Dazu werden die Montageteile oft kryogenisch tiefgekühlt, bevor sie unter Krafteinwirkung in die Ausnehmungen eingepasst werden.

Als typisches Beispiel für einen solchen Montagevorgang kann die Montage von Ventilsitzringen und Ventilführungen in dafür vorgesehene Aufnahmen eines Zylinderkopfes angeführt werden.

Der Zylinderkopf zählt zu den kompliziertesten Gussteilen am Kraftfahrzeug. Reihenmotoren und 15°-V-Motoren haben nur einen Zylinderkopf, alle anderen Bauformen mindestens zwei. In aller Regel werden Zylinderköpfe aus einer Aluminiumlegierung hergestellt. Sie unterliegen bei ihrer Fertigung einem hohen mechanischen Bearbeitungs- und Montageaufwand. Dessen größter Teil entfällt auf die Gaswechselventile mit allen zugehörigen Bauteilen. Diese Gaswechselventile sind Ein- und Auslassventile, die den Verbrennungsraum abdichten und den Gaswechsel im Motor steuern. Bei einem Zylinderkopf mit Vierzylindertechnik sind für jeden Zylinder der Verbrennungskraftmaschine vier Gaswechselventile im Zylinderkopf vorgesehen, und zwar zwei Einlass- und zwei Auslassventile. Diese Ventile umfassen jeweils einen Ventilteller und einen Ventilstößel, der verschiebbar in einer Bohrung im Zylinderkopf sitzt, wobei der Ventilteller mit einem Ventilsitz am Eingang der Bohrung in Eingriff gelangen kann, um die Einlass- und Auslassöffnungen zur Zylinderkammer zu öffnen und zu schließen.

Für jedes Ventil ist eine Ventilführung vorgesehen, die dazu dient, den Ventilstößel in seiner Bewegung zu führen. Sie hat die Aufgabe, die Seitenkräfte aufzunehmen, welche auf den Ventilstößel wirken. Die Ventilführung zentriert das Ventil auf den Ventilsitz und leitet einen Teil der Wärme vom Ventilkopf über den Ventilstößel zum Zylinderkopf ab.

Ventilsitzringe werden in den Zylinderkopf eingesetzt, um verschleißfeste Auflageflächen für die Ventilteller bereitzustellen.

Die Ventilsitzringe und Ventilführungen werden nach vorheriger Bearbeitung und eventuell Erwärmung der entsprechenden Einbaustellen im Zylinderkopf unterkühlt eingepresst. Sie werden dann im Zylinderkopf durch einen Presssitz in ihrer Position gehalten. Die Ventilführungen und Ventilsitzringe werden beim Einpressen in die Gehäusebohrung des Zylinderkopfs radial eingeschnürt. Die Gehäusebohrung hingegen wird aufgeweitet.

Die korrekte Montage von Ventilsitzringen und Ventilführungen ist entscheidend für die einwandfreie Arbeitsweise eines Zylinderkopfs. Es ist wichtig, dass die Ventilsitzringe im Zylinderkopf gut festsitzen.

### Stand der Technik

Zum Tiefkühlen der Montageteile wird meist ein Kältebad verwendet, das mit flüssigem Gas, insbesondere flüssigem Stickstoff (liquid nitrogen, LN2) gefüllt ist.

Dieses Kältebad ist Teil der Montagestation, in der die Montageteile am Werkstück befestigt werden. Die Montageteile werden aus einem Magazin entnommen, durch das Bad hindurchgeführt und sofort nach ihrem Austritt aus dem Bad in der Montagestation montiert.

Es gibt verschiedene Möglichkeiten, die Montageteile durch das Kältebad hindurchzuführen. Ein bekanntes Verfahren besteht darin, Führungsspuren aus Stahl für die Montageteile in dem Kältebad vorzusehen.

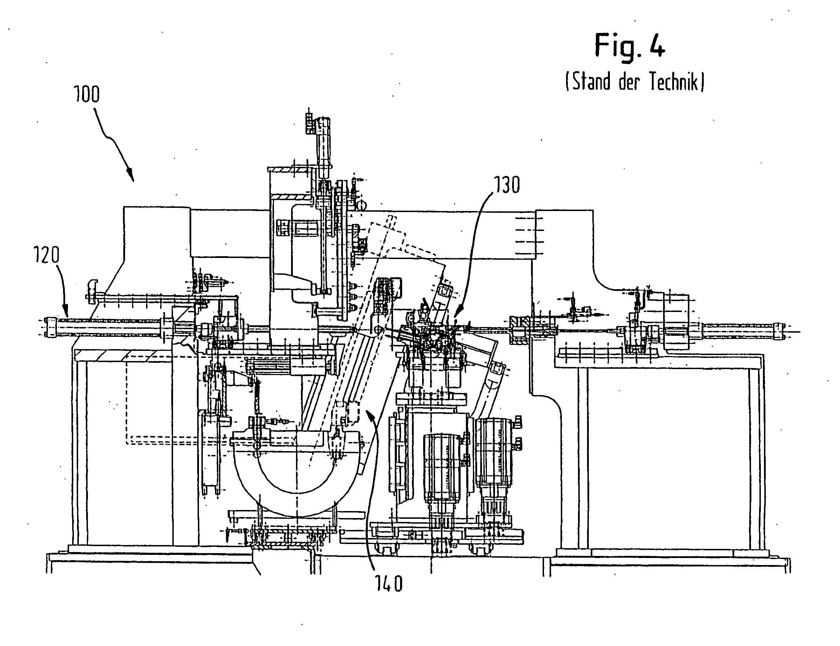

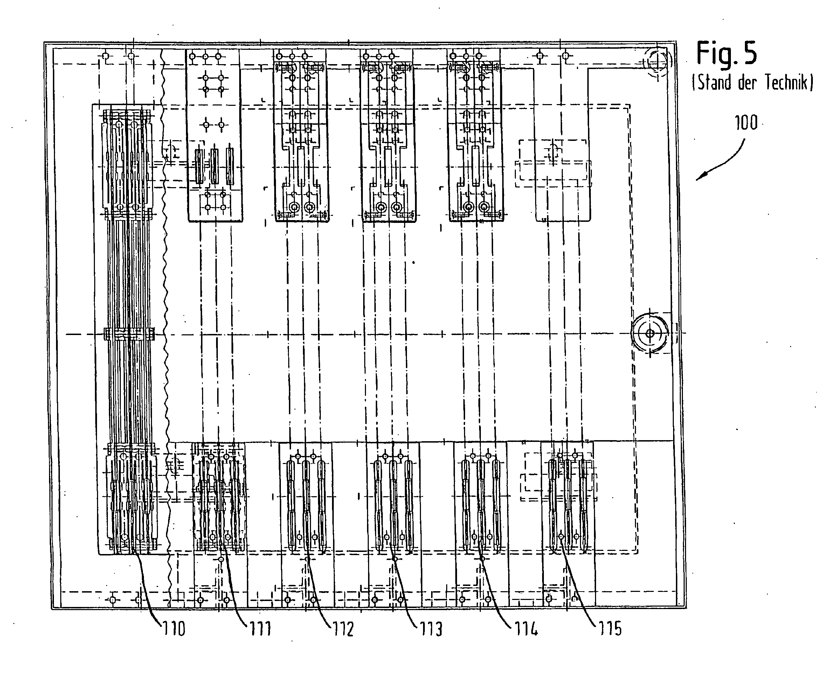

Die Figuren 4 und 5 zeigen eine Seitenansicht einer Montagestation mit einem solchermaßen ausgestalteten Kältebad 100 (Figur 4), bzw. eine Draufsicht auf das Kältebad 100 (Figur 5). Die in Figur 4 dargestellte Montagestation verfügt außerdem über eine Transporteinrichtung 140, die die unterkühlten Montageteile aus dem Kältebad 100 entnimmt und bis in eine Montageposition befördert, wo sie mittels einer Einpresseinrichtung 120 an einem Werkstück 130 montiert werden.

Diese Führungsspuren werden in einer speziellen Ausgestaltung auch als "Bananendurchführungen" bezeichnet.

Insbesondere aus der Draufsicht Fig. 5 wird deutlich, dass in dem Kältebad 100 insgesamt 18 solcher Spuren vorgesehen sind, und zwar in sechs Blöcken 110-115 à drei Spuren. Dies beruht darauf, dass das hier dargestellte Kältebad 100 Teil einer Montagestation zum Montieren von Ventilsitzringen an Zylinderköpfen ist, in der an Sechszylinderköpfen jeweils sechs Ventilsitzringe gleichzeitig angebracht werden.

Für verschiedene Zylinderköpfe sind aber verschiedene Ventilsitzringe erforderlich; in den jeweils drei Spuren eines Blocks 110-115 werden daher drei verschiedene Typen von Ventilsitzringe durch das Bad geführt, so dass die Montagestation wahlweise einen dieser drei Typen an dem gerade zu bestückenden Zylinderkopf anbringen kann.

Sollen mit einer solchen Montagestation andere als diese drei Typen von Ventilsitzringen montiert werden, so ist es notwendig, die Anzahl der Spuren pro Block zu erhöhen. Der Bauraum zum Vorsehen zusätzlicher Spuren im Kältebad ist aber durch den Abstand zwischen den Übergabeeinrichtungen begrenzt, der sich nach dem Abstand zwischen den Einpressdornen der Montagestation richtet, der durch den Abstand zwischen den Aufnahmebohrungen für die Ventilsitzringe im Zylinderkopf, also letztlich durch den Abstand der Zylinder im Motor begrenzt ist.

In dem konkreten Beispiel der Figur 5 können nicht mehr als fünf Führungsspuren pro Block, insgesamt also nicht mehr als dreißig Führungsspuren pro Block vorgesehen werden, so dass lediglich fünf verschiedene Typen von Montageteilen gleichzeitig durch das Bad geführt und so der Montageeinheit zur Verfügung gestellt werden können. Die Typenvielfalt ist somit auf fünf beschränkt.

Darüber hinaus befinden sich bei einer solchen herkömmlichen Vorrichtung stets recht viele Bauteile gleichzeitig im Stickstoffbad. Abhängig von der Montageabfolge kann es vorkommen, dass ein bestimmter Typ von Montageteil längere Zeit nicht benötigt wird und daher längere Zeit, eventuell sogar bis zu einigen Tagen, im Kältebad verbleibt.

### Darstellung der Erfindung

Die Aufgabe der vorliegenden Erfindung ist es, eine Vorrichtung und ein Verfahren zum Unterkühlen von Montageteilen zu schaffen, mit denen eine Montagestation flexibler mit unterkühlten Montageteilen beschickt werden kann.

Diese Aufgabe wird einerseits durch eine Vorrichtung gemäß dem Patentanspruch 1 gelöst.

Diese Vorrichtung ist versehen mit:
- einem mit einem Kältebad zumindest teilweise gefüllten Behälter,
- einem in dem Behälter zumindest teilweise unterhalb der Oberfläche des Kältebads vorgesehenen Köcher zur Aufnahme der zu unterkühlenden Montageteile,
- einer Vorrichtung zum Einbringen der Montageteile in den Köcher, und
- einer Vorrichtung zum Entfernen der unterkühlten Montageteile aus dem Köcher. Statt der Führungsbahnen der herkömmlichen Lösung verfügt die erfindungsgemäße Vorrichtung über einen Köcher, in den die zu unterkühlenden Montageteile eingebracht und aus dem sie nach einer entsprechenden Verweilzeit wieder herausgeholt werden. Dies flexibilisiert die Unterkühlung der Montageteile wesentlich, und zwar insofern, als stets nur diejenigen Montageteile in den Köcher eingebracht und dort unterkühlt zu werden brauchen, die unmittelbar anschließend montiert werden sollen.

Es ist nicht mehr notwendig, stets Montageteile jedes in der Montagestation überhaupt verwendeten Typs in dem Kältebad vorzuhalten. Als unmittelbare Folge davon wird es auch möglich, die Typenvielfalt drastisch zu erhöhen, da sie nicht mehr durch die Ausgestaltung des Kältebads beschränkt ist.

Die erfindungsgemäße Vorrichtung hat außerdem den Vorteil, dass das Kältebad wesentlich kleiner ausgestaltet werden kann als bei der herkömmlichen Lösung mit den durch das Bad verlaufenden Führungsschienen. Das Kältebad braucht nur so groß zu sein, dass es den Köcher sowie eine ausreichende Menge Flüssigkeit zum Abkühlen der darin befindlichen Montageteile beinhaltet. Wie später noch genauer beschrieben wird, braucht der Köcher seinerseits lediglich ein bis drei Sätze zu unterkühlender Montageteile aufnehmen zu können.

Ein solcher vergleichsweise kleiner Kühlbehälter nimmt weniger Raum in der Montagestation ein und führt darüber hinaus auch zu einem entsprechend reduzierten Stickstoffverbrauch; auch muss der Behälter an den kritischen Stellen weniger beheizt werden, um ein Vereisen zu verhindern.

Neben der verhältnismäßig kompakten Ausgestaltung des Kühlbehälters hat die erfindungsgemäße Vorrichtung außerdem den Vorteil, dass die Wege von der Austrittsstelle der unterkühlten Montageteile aus dem Kühlbehälter deutlich kürzer sind als bei der herkömmlichen Lösung. Dadurch reduziert sich wiederum auch die Zeit, die für den Transport der Montageteile von der Austrittsstelle aus dem Kältebad bis zur Montageposition benötigt wird.

Als "Köcher" wird im Rahmen der vorliegenden Anmeldung jede Art von Aufnahmeeinrichtung verstanden, die in irgendeiner Form für das Kältebad durchlässige Wände hat, so dass das Kältebad den darin befindlichen Köcher durchdringt und die Montageteile darin abkühlt. Insbesondere kann es sich um eine korbartige Aufnahmeeinrichtung mit sieb- oder gitterartigen Wänden handeln. Die Erfindung ist nicht auf eine bestimmte Form oder Ausgestaltung dieses Köchers beschränkt.

Vorteilhafte Weiterbildungen der erfindungsgemäßen Vorrichtung ergeben sich aus den abhängigen Vorrichtungsansprüchen.

In einer vorteilhaften Ausgestaltung weist die besagte Vorrichtung zum Entfernen der unterkühlten Montageteile aus dem Köcher eine Anhebeeinrichtung auf, die die unterkühlten Montageteile aus dem Köcher bis in eine Position oberhalb des Füllstands des Kältebads in dem Behälter anhebt, und einen Greifer, der die unterkühlten Montageteile an dieser Position übernimmt und zu einer Montageeinrichtung befördert. Die Anhebeeinrichtung und/oder der Greifer können jedoch auch durch andere geeignete Einrichtungen ersetzt werden.

Diese Ausgestaltung hat den Vorteil, dass Montageteile mit einer nahezu beliebigen Ausgestaltung gehandhabt werden können; die Vorrichtung zum Entfernen der unterkühlten Montageteile aus dem Köcher braucht nicht an die Gestalt der jeweiligen Montageteile angepasst zu werden.

Die Anhebeeinrichtung kann mit Stiften versehen sein, die die unterkühlten Montageteile in vertikaler Richtung aus dem Köcher herausheben. In diesem Fall weist der Köcher in seinem unteren Bereich Öffnungen auf, die den Durchtritt dieser Stifte ermöglichen.

Der Köcher ist vorzugsweise stationär im Behälter befestigt, kann aber auch darin verfahrbar sein.

Das Kältebad beinhaltet vorzugsweise Flüssiggas, insbesondere Stickstoff, der sich bei -195,82°C verflüssigt und die Montageteile somit relativ rasch abkühlen kann. Fachleute auf diesem Gebiet kennen die geeigneten Kältebäder und ihre Vor- und Nachteile.

Vorzugsweise ist ein Vertikalspeicher zum Vorhalten der zu unterkühlenden Montageteile vorgesehen, aus dem die zu unterkühlenden Montageteile entnommen und zum Kältebad befördert werden. Die Typenvielfalt der im Kältebad unterkühlbaren und der Montageeinrichtung zuführbaren Montageteile richtet sich dann nach der Ausgestaltung dieses Vertikalspeichers, d.h. danach, wie viele verschiedene Typen von Montageteilen dieser Speicher aufnehmen und ausgeben kann. Statt eines Vertikalspeichers kann aber auch jede andere Art Speicher oder Magazin vorgesehen werden.

Der Transport der zu unterkühlenden Montageteile vom Speicher oder Magazin zum Kältebad kann mittels einer Lanze erfolgen, mit der die zu unterkühlenden Montageteile in eine definierte Position oberhalb des Kältebads befördert werden und die die Montageteile in dieser definierten Position in den Köcher fallen lässt. So kann die Schwerkraft zum Einbringen der Montageteile in das Kältebad ausgenutzt werden.

Der Köcher und/oder die innerhalb des Kühlbehälters vorgesehenen Bestandteile der Vorrichtung zum Entfernen der unterkühlten Montageteile aus dem Köcher sind vorzugsweise aus einem Material mit geringer Wärmeleitfähigkeit wie Karbon und/oder GFK (Glasfaserverbund-Kunststoff) gemacht. Die Wärmeleitfähigkeit dieser Materialien ist zwölf mal kleiner als die von Stahl.

Je nach Verhältnis zwischen Verweilzeit der Montageteile im Kältebad und Taktzeit der Montageeinrichtung kann der Köcher einen Satz von Montageteilen oder auch zwei oder drei Sätze zeitlich überlappend zur Unterkühlung aufnehmen.

Der Köcher kann in Form zumindest einer U-Schiene vorgesehen oder auch V-förmig ausgestaltet sein. Die letztgenannte Ausgestaltung hat den Vorteil, dass die zu unterkühlenden Montageteile im sich stetig nach unten hin verjüngenden Köcher unabhängig von ihrer Größe von selbst eine definierte Lage einnehmen.

Alternativ oder zusätzlich kann der Köcher unterteilte Aufnahmen für die einzelnen zu unterkühlenden Montageteile haben, um diese in einer definierten Lage zu halten.

Andererseits löst ein Verfahren gemäß dem Patentanspruch 16 die oben genannte Aufgabe.

Das Verfahren hat die folgenden Schritte:
- Befördern eines Satzes von zu unterkühlenden Montageteilen in eine definierte Eintrittsposition eines mit einem Kältebad zumindest teilweise gefüllten Behälters,
- Einbringen der zu unterkühlenden Montageteile in einen zumindest teilweise unterhalb der Oberfläche des Kältebads in dem Behälter vorgesehenen Köcher, und
- Entfernen der zu unterkühlenden Montageteile aus dem Köcher nach einer bestimmten Verweilzeit.

Das erfindungsgemäße Verfahren hat den Vorteil, dass nur diejenigen Teile unterkühlt werden, die auch unmittelbar anschließend montiert werden. So wird die Unterkühlung der Montageteile wesentlich flexibilisiert. Gleichzeitig werden Probleme wie Festfrieren oder Vereisen der Montageteile bei längerer Verweildauer im Stickstoffbad vermieden.

Es ist nicht mehr notwendig, stets Montageteile jedes in der Montagestation überhaupt verwendeten Typs in dem Kältebad vorzuhalten. Als unmittelbare Folge davon wird es auch möglich, die Typenvielfalt drastisch zu erhöhen, da sie nicht mehr durch die Ausgestaltung des Kältebads beschränkt ist. So können in einer Montagestation beispielsweise acht, zehn oder sogar zwölf verschiedene Ventilsitzringe montiert werden, und zwar auch bei Losgröße 1.

Vorteilhafte Weiterbildungen des erfindungsgemäßen Verfahrens ergeben sich aus den abhängigen Verfahrensansprüchen.

Wie bereits mit Bezug auf die Vorrichtung erwähnt, werden die zu unterkühlenden Montageteile vorzugsweise unter Ausnutzung der Schwerkraft durch Hineinfallenlassen in das Kältebad eingebracht.

Die Montageteile können, wie ebenfalls bereits erläutert, mittels einer Lanze in eine definierte Position oberhalb des Kältebads befördert werden.

Die zu unterkühlenden Montageteile können zuvor einem Vertikalmagazin entnommen werden. Die Typenvielfalt richtet sich dann nach der Ausgestaltung und Kapazität dieses Vertikalmagazins oder des sonst verwendeten Speichers. So ist eine Typenerweiterung mit geringem Aufwand möglich, indem der Speicher oder das Magazin erweitert wird; ein Umbau des Kühlbehälters ist nicht notwendig.

Ist die Verweildauer der Montageteile im Kältebad (typischerweise ca. 28 Sekunden für die Unterkühlung von Ventilsitzringen in flüssigem Stickstoff) länger als die Taktzeit der Montageeinrichtung, die die unterkühlten Montageteile verwendet, so werden die Schritte des erfindungsgemäßen Verfahrens für mehrere Sätze von Montageteilen zeitlich überlappend ausgeführt. Der Köcher nimmt dann mehrere Sätze von Montageteilen zeitlich überlappend zur Unterkühlung auf, d.h. ein Satz von Montageteilen wird bereits in den Köcher eingebracht, während sich der vorherige noch im Köcher befindet. Ist die Verweildauer deutlich länger als die Taktzeit, können sich auch drei aufeinanderfolgende Sätze von Montageteilen gleichzeitig im Köcher befinden.

### Kurze Beschreibung der Zeichnungen

Die Erfindung wird im folgenden anhand der anliegenden Zeichnungen näher beschrieben. Darin sind
- Figur 1: eine schematische Seitenansicht einer Beschickung für eine Montagestation, mit einem Vertikalmagazin sowie einer erfindungsgemäßen Vorrichtung zum Unterkühlen von Montageteilen;
- Figur 2: eine Detailansicht der erfindungsgemäßen Vorrichtung zum Unterkühlen von Montageteilen;
- Figur 3: eine Frontansicht der erfindungsgemäßen Vorrichtung zum Unterkühlen von Montageteilen;
- Figur 4: eine Seitenansicht einer Montagestation mit einem herkömmlichen Kältebad, und
- Figur 5: eine Draufsicht auf das Kältebad der in Figur 4 dargestellten Montagestation.

### Ausführliche Beschreibung von bevorzugten Ausführungsformen der Erfindung

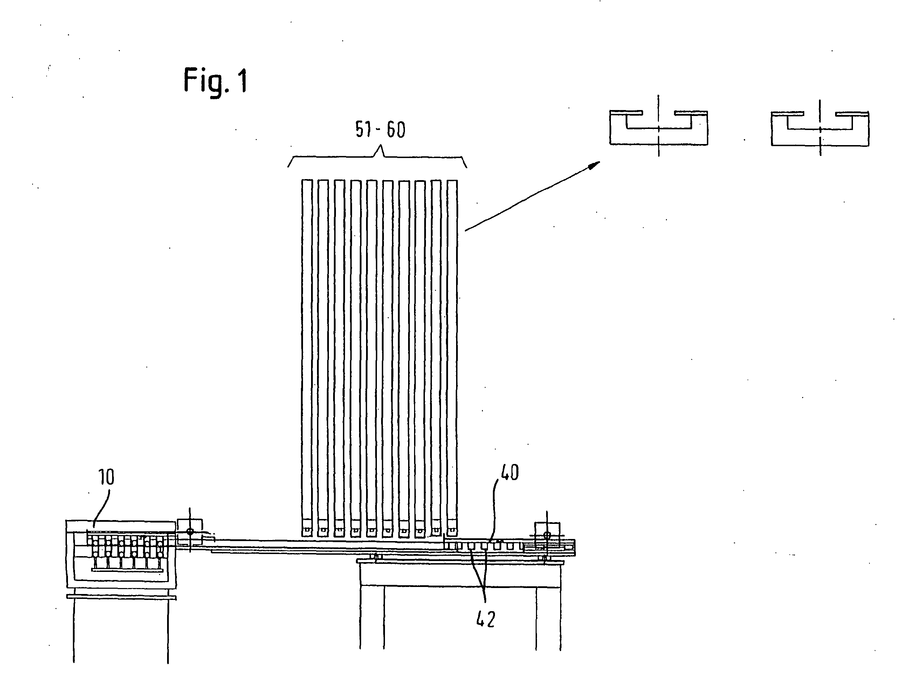

Die Figuren 1 bis 3 zeigen eine bevorzugte Ausführungsform einer erfindungsgemäßen Vorrichtung 10 zum Unterkühlen von Bauteilen.

Die Unterkühlvorrichtung 10 dient ebenso wie die in Figur 4 dargestellte herkömmliche Unterkühlvorrichtung 100 dazu, Montageteile zu unterkühlen, die in einer Montagestation in Ausnehmungen in einem Werkstück eingepasst bzw. eingepresst werden sollen. Die erfindungsgemäße Unterkühlvorrichtung 10 ist somit auch an einer vergleichbaren Position einer solchen Montagestation (in Figur 1 nicht dargestellt) vorgesehen.

Im Gegensatz zu der bekannten Vorrichtung 100 werden mit der erfindungsgemäßen Unterkühlvorrichtung 10 aber stets nur diejenigen Montageteile unterkühlt, die auch unmittelbar anschließend montiert werden sollen. Beispielsweise werden zur Montage von sechs Ventilsitzringen an einem Sechszylinderkopf diese sechs Ventilsitzringe aus einem Magazin entnommen, zu der erfindungsgemäßen Unterkühlvorrichtung transportiert, dort unterkühlt und an die Montageeinrichtung übergeben. Dies wird im folgenden im Detail erläutert.

Ein solches Vertikalmagazin mit Schächten 51-60, in denen die zu montierenden Teile wie beispielsweise Ventilsitzringe vorgehalten werden, ist in Figur 1 ebenfalls dargestellt.

Die Anzahl der nebeneinander vorgesehenen Vertikalschächte 51-60 bestimmt die realisierbare Typenvielfalt. Im dargestellten Beispiel sind zehn Vertikalschächte 51-60 vorgesehen, was bedeutet, dass grundsätzlich zehn verschiedene Ventilsitzringe dort vorgehalten, zu der Unterkühlvorrichtung 10 befördert, dort unterkühlt und an einem Zylinderkopf montiert werden können.

Eine Lanze 40 befördert die Ventilsitzringe aus dem Vertikalmagazin hin zu der erfindungsgemäßen Unterkühlvorrichtung 10. Die Lanze 40 ist zu diesem Zweck mit Transportaufnahmen 42 für die Ventilsitzringe versehen. Sie ist in horizontaler Richtung so verfahrbar, dass ihre Transportaufnahmen 42 an Ausgabepositionen der Vertikalschächte 51-60 positioniert und dort mit jeweils einem Ventilsitzring bestückt werden können.

Die Lanze 40 entnimmt dem Vertikalmagazin einen Satz von Ventilsitzringen, die an ein und demselben Zylinderkopf montiert werden sollen, beispielsweise also sechs Ventilsitzringe für einen Sechszylinderkopf. Diese sechs Ventilsitzringe können aus den zehn verschiedenen, in den zehn Vertikalschächten 51-60 vorhandenen Typen ausgewählt werden.

Die sechs für die Montage an einem bestimmten Zylinderkopf ausgewählten Ventilsitzringe werden in sechs Transportaufnahmen 42 der Lanze 40 zu der Unterkühlvorrichtung 10 befördert.

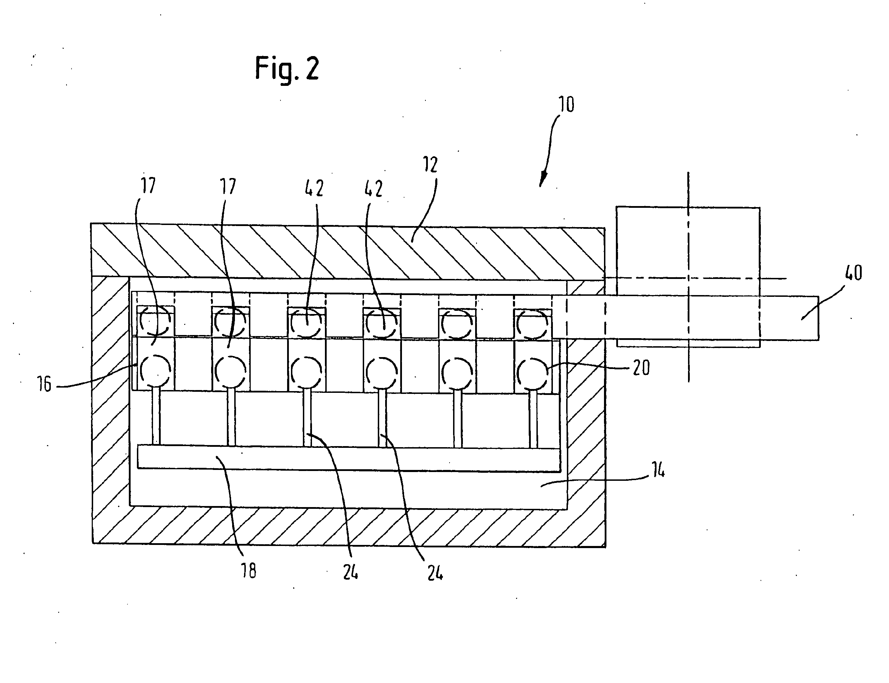

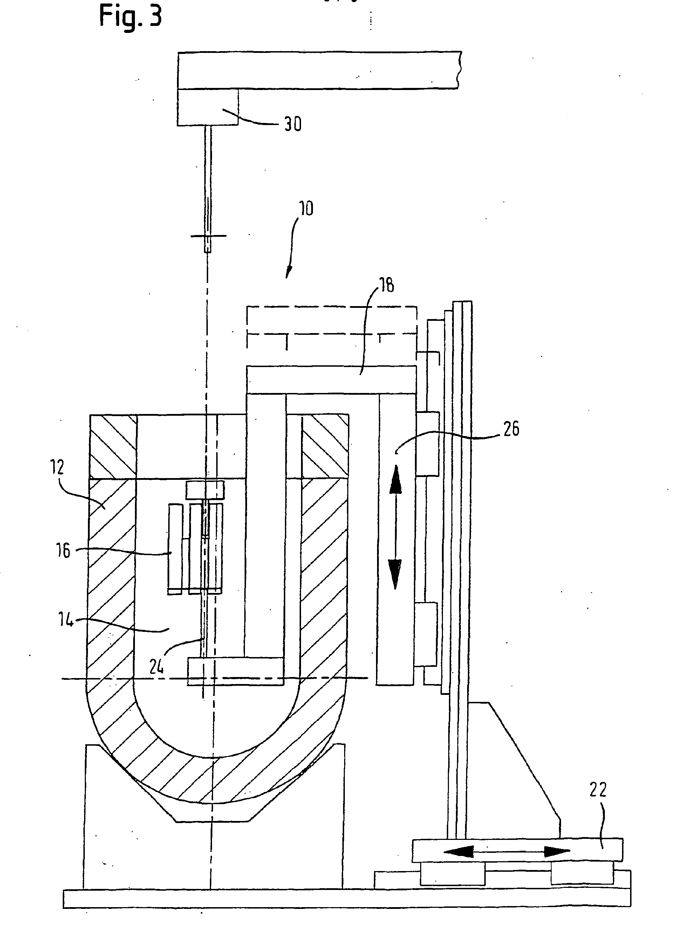

Der Aufbau der erfindungsgemäßen Unterkühlvorrichtung 10 wird mit Bezug auf die Figuren 2 und 3 deutlich.

Als wesentlichen Bestandteile weist die Unterkühlvorrichtung 10 einen wärmeisolierten Behälter 12 auf, der bis zu einer gewissen Höhe mit flüssigem Stickstoff 14 gefüllt ist.

Fest in dem Stickstoffbehälter 12 angeordnet ist eine Aufnahmevorrichtung für die zu unterkühlenden Ventilsitzringe in Form eines Köchers 16.

In diesen Köcher 16 hinein werden die mittels der Lanze 40 von dem Vertikalmagazin her transportierten Ventilsitzringe fallengelassen. Dazu wird die Lanze 40 bis in eine definierte Position direkt oberhalb des Köchers 16 verfahren. Die Figur 2 zeigt die Lanze mit den sechs Ventilsitzringen 20 in dieser definierten Position. Erst wenn sie sich in dieser Position befindet, werden die Transportaufnahmen 42 der Lanze 40 nach unten hin geöffnet, so dass die darin befindlichen sechs Ventilsitzringe in den Köcher 16 fallen können.

Aus Figur 2 ergibt außerdem auch die Anordnung der zu unterkühlenden Ventilsitzringe 20 im Köcher 16; diese sind hier der Einfachheit halber zusätzlich zu den noch in der Lanze 40 befindlichen Ventilsitzringen 20 dargestellt. Es wird deutlich, dass sechs solcher Ventilsitzringe 20 nebeneinander in dem Köcher 16 untergebracht sind. Die Ventilsitzringe 20 sollten im Köcher 16 eine möglichst genau definierte Lage haben, um das anschließende Herausheben der Ventilsitzringe 20 aus dem Köcher sowie die Übergabe der Ventilsitzringe an die Montageeinrichtung zu erleichtern. Zu diesem Zweck verfügt der Köcher, der hier im wesentlichen die Form einer U-Schiene hat, in diesem Beispiel über sechs voneinander getrennte Aufnahmen 17 für die sechs Ventilsitzringe 20, die die Lage der Ventilsitzringe 20 im Köcher 16 recht genau festlegen.

Die erfindungsgemäße Unterkühlvorrichtung verfügt außerdem über einen Mechanismus, mittels dessen die unterkühlten Ventilsitzringe - nach einer vorgegebenen notwendigen Verweilzeit von beispielsweise 28 Sekunden - aus dem Köcher 16 herausgehoben werden können. Dieser Mechanismus besteht aus einer Anhebeeinrichtung 18 sowie einem Greifer 30. Wie sich aus den Figuren 2 und 3 ergibt, erstreckt sich die Anhebeeinrichtung bis in das Stickstoffbad hinein und ist mit Anhebestiften 24 versehen, von denen jeder unterhalb eines Ventilsitzrings 20 im Köcher 16 angeordnet werden kann. Die Anhebeeinrichtung 18 kann insgesamt mittels einer Vertikalverstellung 26 und einer Horizontalverstellung 22 bezüglich des Köchers 16, der stationär im Behälter 12 angeordnet ist, bewegt werden und so die Ventilsitzringe 20 aus ihren Aufnahmen im Köcher 16 nach oben anheben, und zwar bis nach oberhalb des Füllstands des flüssigen Stickstoffs 14 im Behälter 12.

An dieser Stelle übernimmt dann der oberhalb des Behälters 12 vertikal verfahrbar vorgesehene Greifer 30 die unterkühlten Ventilsitzringe 20 und übergibt sie an die Einpressdorne zum Einpressen der unterkühlten Ventilsitzringe 20 in dazu vorgesehene Ausnehmungen in einem Zylinderkopf (nicht dargestellt).

In dem eben beschriebenen Beispiel kann der Köcher 16 sechs Ventilsitzringe 20 gleichzeitig aufnehmen und unterkühlen, die anschließend gleichzeitig an einem Zylinderkopf montiert werden. Es ist aber auch möglich, den Köcher 16 so auszugestalten, dass mehrere Sätze von Ventilsitzringen 20 gleichzeitig im Köcher unterkühlt werden können. Dies ist insbesondere dann sinnvoll, wenn die Taktzeit der Montageeinrichtung kürzer ist als die Verweilzeit der Ventilsitzringe 20 im Stickstoffbad. In diesem Fall werden, während sich die Ventilsitzringe für den als nächstes zu bestückenden Zylinderkopf noch im Köcher 16 befinden, schon die Ventilsitzringe für den als übernächstes zu bestückenden Zylinderkopf in den Köcher 16 eingebracht und unterkühlt. Die Verweil-Zeiträume der verschiedenen Sätze von Ventilsitzringen im Behälter 12 überlappen sich somit derart, dass die benötigten unterkühlten Ventilsitzringe zu Beginn eines jeden Montagetaktes zur Verfügung stehen. Die einzelnen Sätze von Ventilsitzringen 20 können dabei beispielsweise in Reihen hintereinander im Köcher 16 vorgesehen werden.

In diesem Fall ist die Anhebeeinrichtung 18 mittels der Vertikalverstellung 26 und der Horizontalverstellung 22 bezüglich des Köchers 16 so verschiebbar, dass sie den jeweils benötigten Satz von Ventilsitzringen 20 aus dem Köcher 16 herausheben kann, während die übrigen Sätze von Ventilsitzringen 20 im Köcher 16 verbleiben.

Falls die Verweilzeit deutlich länger ist als der Montagetakt, muss der Köcher 16 eventuell auch drei Sätze von Ventilsitzringen 20 gleichzeitig aufnehmen können.

Die erfindungsgemäße Vorrichtung und das erfindungsgemäße Verfahren sind hier mit Bezug auf die Unterkühlung von Ventilsitzringen zur Montage an Zylinderköpfen beschrieben worden. Die Erfindung ist aber nicht darauf beschränkt, sondern ist zur Unterkühlung aller möglichen Montageteile verwendbar, insbesondere für die Unterkühlung von Massenteilen für die Großserienfertigung.

## Patentansprüche

1. Vorrichtung zum Unterkühlen von Montageteilen, mit:
- einem mit einem Kältebad (14) zumindest teilweise gefüllten Behälter (12),
- einem in dem Behälter (12) zumindest teilweise unterhalb der Oberfläche des Kältebads (14) vorgesehenen Köcher (16) zur Aufnahme der zu unterkühlenden Montageteile (20),
- einer Vorrichtung zum Einbringen der Montageteile (20) in den Köcher (16), und
- einer Vorrichtung zum Entfernen der unterkühlten Montageteile (20) aus dem Köcher (16).

2. Vorrichtung nach Anspruch 1, bei welcher die Vorrichtung zum Entfernen der unterkühlten Montageteile (20) aus dem Köcher (16) eine Anhebeeinrichtung (18) aufweist, die die unterkühlten Montageteile (20) aus dem Köcher (16) bis in eine Position oberhalb des Füllstands des Kältebads (14) in dem Behälter anhebt, und einen Greifer (30), der die unterkühlten Montageteile (20) an dieser Position übernimmt und zu einer Montageeinrichtung befördert.

3. Vorrichtung nach Anspruch 1 oder 2, bei welcher der Köcher (16) stationär im Behälter (12) befestigt ist.

4. Vorrichtung nach einem der vorangehenden Ansprüche, in welcher Flüssiggas, insbesondere flüssiger Stickstoff, als Kältebad (14) verwendet wird.

5. Vorrichtung nach einem der vorangehenden Ansprüche, weiter mit einem Vertikalspeicher (51-60) zum Vorhalten der zu unterkühlenden Montageteile.

6. Vorrichtung nach einem der vorangehenden Ansprüche, weiter mit einer Einrichtung (40) zum Transportieren der Montageteile (20) von einem Speicher oder Magazin zum Kühlbehälter (12).

7. Vorrichtung nach Anspruch 6, bei welcher die Einrichtung (40) zum Transportieren der Montageteile (20) eine Lanze (40) aufweist, mit der die zu unterkühlenden Montageteile (20) in eine definierte Position oberhalb des Kältebads (14) befördert werden und die die Montageteile (20) in dieser definierten Position in den Köcher (16) fallen lässt.

8. Vorrichtung nach einem der vorangehenden Ansprüche, bei welcher der Köcher (16) aus Karbon und/oder GFK (Glasfaserverbund-Kunststoff) gemacht ist.

9. Vorrichtung nach einem der vorangehenden Ansprüche, bei welcher die innerhalb des Behälters (12) vorgesehenen Bestandteile der Vorrichtung zum Entfernen der unterkühlten Montageteile (20) aus dem Köcher (16) aus Karbon und/oder GFK (Glasfaserverbund-Kunststoff) gemacht sind.

10. Vorrichtung nach einem der vorangehenden Ansprüche, bei welcher der Köcher (16) so ausgestaltet ist, dass er einen Satz von Montageteilen (20) zur Unterkühlung aufnehmen kann.

11. Vorrichtung nach einem der vorangehenden Ansprüche, bei welcher der Köcher (16) so ausgestaltet ist, dass er mehrere Sätze von Montageteilen (20) zeitlich überlappend zur Unterkühlung aufnehmen kann.

12. Vorrichtung nach einem der vorangehenden Ansprüche, bei welcher der Köcher (16) in Form zumindest einer U-Schiene vorgesehen ist.

13. Vorrichtung nach einem der Ansprüche 1 bis 11, bei welcher der Köcher (16) V-förmig ausgestaltet ist.

14. Vorrichtung nach einem der vorangehenden Ansprüche, bei welcher der Köcher (16) unterteilte (17) Aufnahmen für die einzelnen zu unterkühlenden Montageteile (20) hat.

15. Vorrichtung nach einem der Ansprüche 2 bis 14, bei welcher die Anhebeeinrichtung (18) mit Stiften (24) versehen ist, die die unterkühlten Montageteile (20) in vertikaler Richtung aus dem Köcher (16) herausheben, und der Köcher (16) in seinem unteren Bereich Öffnungen aufweist, die den Durchtritt dieser Stifte (24) ermöglichen.

16. Verfahren zum Unterkühlen von Montageteilen, mit den folgenden Schritten:
- Befördern eines Satzes von zu unterkühlenden Montageteilen (20) in eine definierte Eintrittsposition eines mit einem Kältebad (14) zumindest teilweise gefüllten Behälters (12),
- Einbringen der zu unterkühlenden Montageteile (20) in einen zumindest teilweise unterhalb der Oberfläche des Kältebads (14) in dem Behälter (12) vorgesehenen Köcher (16), und
- Entfernen der zu unterkühlenden Montageteile (20) aus dem Köcher (16) nach einer bestimmten Verweilzeit.

17. Verfahren nach Anspruch 16, bei welchem die zu unterkühlenden Montageteile (20) durch Hineinfallenlassen in das Kältebad (14) eingebracht werden.

18. Verfahren nach Anspruch 16 oder 17, bei welchem die Montageteile (20) mittels einer Lanze (40) in eine definierte Position oberhalb des Kältebads (14) befördert werden.

19. Verfahren nach einem der vorangehenden Verfahrensansprüche, bei welchem die zu unterkühlenden Montageteile zuvor einem Vertikalmagazin (51-60) entnommen werden.

20. Verfahren nach einem der vorangehenden Verfahrensansprüche, bei welchem die unterkühlten Montageteile (20) aus dem Köcher (16) mittels einer Anhebeeinrichtung (18) bis in eine Position oberhalb des Füllstands des Kältebads (14) in dem Behälter angehoben und anschließend mittels eines Greifers (30) an dieser Position übernommen und zu einer Montageeinrichtung befördert werden.

21. Verfahren nach einem der vorangehenden Verfahrensansprüche, in welchem Flüssiggas, insbesondere flüssiger Stickstoff, als das Kältebad (14) verwendet wird.

22. Verfahren nach einem der vorangehenden Verfahrensansprüche, bei welchem der Köcher (16) einen Satz von Montageteilen (20) zur Unterkühlung aufnimmt.

23. Verfahren nach einem der vorangehenden Verfahrensansprüche, bei welchem das Befördern eines Satzes von zu unterkühlenden Montageteilen (20) in eine definierte Eintrittsposition eines mit einem Kältebad (14) zumindest teilweise gefüllten Behälters (12), das Einbringen der zu unterkühlenden Montageteile (20) in einen zumindest teilweise unterhalb der Oberfläche des Kältebads (14) in dem Behälter (12) vorgesehenen Köcher (16), und das Entfernen der zu unterkühlenden Montageteile (20) aus dem Köcher (16) nach einer bestimmten Verweilzeit für mehrere Sätze von Montageteilen (20) zeitlich überlappend ausgeführt werden, so dass der Köcher (16) mehrere Sätze von Montageteilen (20) zeitlich überlappend zur Unterkühlung aufnimmt.

## Claims

1. Device for sub-cooling assembly parts having:
- a container (12) at least partly filled with a cooling bath (14),
- a boiler (16) provided in the container (12) at least partly below the surface of the cooling bath (14) to receive the assembly parts (20) to be sub-cooled,
- a device for introducing the assembly parts (20) into the boiler (16), and
- a device for removing the sub-cooled assembly parts (20) from the boiler (16).

2. Device according to claim 1, in which the device for removing the sub-cooled assembly parts (2) from the boiler (16) has a lifting device (18), which lifts the sub-cooled assembly parts (20) from the boiler (16) into a position above the level of the cooling bath (14) in the container, and a gripper (30) which takes the sub-cooled assembly parts (20) to this position and conveys them to an assembly device.

3. Device according to claim 1 or 2, in which the boiler (16) is attached to be stationary in the container (12).

4. Device according to one of the preceding claims, in which liquid gas, in particular liquid nitrogen, is used as the cooling bath (14).

5. Device according to one of the preceding claims, also having a vertical store (51-60) for stocking the assembly parts to be sub-cooled.

6. Device according to one of the preceding claims, also having a device (40) for transporting the assembly parts (20) from a store or magazine to the cooling container (12).

7. Device according to claim 6, in which the device (40) for transporting the assembly parts (20) has a lance (40), with which the assembly parts (20) to be sub-cooled are conveyed to a defined position above the cooling bath (14) and which allows the assembly parts (20) in this defined position to fall into the boiler (16).

8. Device according to one of the preceding claims, in which the boiler (16) is made from carbon and/or GFK (glass-fibre reinforced plastic).

9. Device according to one of the preceding claims, in which the components of the device provided within the container (12) for removing the sub-cooled assembly parts (20) from the boiler (16) are made from carbon and/or GFK (glass-fibre reinforced plastic).

10. Device according to one of the preceding claims, in which the boiler (16) is designed so that it may receive a set of assembly parts (20) for sub-cooling.

11. Device according to one of the preceding claims, in which the boiler (16) is designed so that it may receive several sets of assembly parts (20) in temporally overlapping manner for sub-cooling.

12. Device according to one of the preceding claims, in which the boiler (16) is provided in the form of at least one U-rail.

13. Device according to one of claims 1 to 11, in which the boiler (16) is designed to be V-shaped.

14. Device according to one of the preceding claims, in which the boiler (16) has subdivided (17) recesses for the individual assembly parts (20) to be sub-cooled.

15. Device according to one of claims 2 to 14, in which the lifting device (18) is provided with pins (24) which lift the sub-cooled assembly parts (20) in vertical direction out of the boiler (16), and the boiler (16) has in its lower region, openings which facilitate the passage of these pins (24).

16. Process for sub-cooling assembly parts having the following steps:
- conveying a set of assembly parts (20) to be sub-cooled to a defined entry position of a container (12) filled at least partly with a cooling bath (14),
- introducing the assembly parts (20) to be sub-cooled into a boiler (16) provided at least partly below the surface of the cooling bath (14) in the container (12), and
- removing the assembly parts (20) to be sub-cooled from the boiler (16) after a certain residence time.

17. Process according to claim 16, in which the assembly parts (20) to be sub-cooled are introduced into the cooling bath (14) by allowing them to fall in.

18. Process according to claim 16 or 17, in which the assembly parts (20) are conveyed to a defined position above the cooling bath (14) by means of a lance (40).

19. Process according to one of the preceding process claims, in which the assembly parts to be sub-cooled are removed from a vertical magazine (51-60) beforehand.

20. Process according to one of the preceding process claims, in which the sub-cooled assembly parts (20) are lifted from the boiler (16) by means of a lifting device (18) into a position above the level of the cooling bath (14) in the container and then taken at this position by means of a gripper (30) and conveyed to an assembly device.

21. Process according to one of the preceding process claims, in which liquid gas, in particular liquid nitrogen, is used as the cooling bath (14).

22. Process according to one of the preceding process claims, in which the boiler (16) receives a set of assembly parts (20) for sub-cooling.

23. Process according to one of the preceding process claims, in which the conveying of a set of assembly parts (20) to be sub-cooled to a defined entry position of a container (12) at least partly filled with a cooling bath (14), the introduction of the assembly parts (20) to be sub-cooled into a boiler (16) provided at least partly below the surface of the cooling bath (14) in the container (12), and the removal of the assembly parts (20) to be sub-cooled from the boiler (16) after a certain residence time are executed for several sets of assembly parts (20) in temporally overlapping manner, so that the boiler (16) receives several sets of assembly parts (20) in temporally overlapping manner for sub-cooling.

## Revendications

1. Dispositif de sous-refroidissement de pièces d'assemblage comprenant :
- un récipient (12) rempli au moins partiellement d'un bain froid (14),
- un carquois (16) prévu dans le récipient (12), au moins partiellement au-dessous de la surface du bain froid (14), afin de recevoir les pièces d'assemblage (20) à sous-refroidir,
- un dispositif d'introduction des pièces d'assemblage (20) dans le carquois (16), et
- un dispositif d'enlèvement des pièces d'assemblage (20) ayant été sous-refroidies hors du carquois (16).

2. Dispositif selon la revendication 1, dans lequel le dispositif d'enlèvement des pièces d'assemblage (20) sous-refroidies hors du carquois (16) présente un dispositif de levage (18), qui soulève les pièces d'assemblage (20) sous-refroidies pour les extraire du carquois (16), jusqu'à une position située au-dessus du niveau de remplissage du bain froid (14) dans le récipient, et un preneur (30) qui, à cette position, prend en charge les pièces d'assemblage (20) sous-refroidies et les transporte à un dispositif d'assemblage.

3. Dispositif selon la revendication 1 ou 2, pour lequel le carquois (16) est fixé de façon stationnaire dans le récipient (12).

4. Dispositif selon l'une des revendications précédentes, dans lequel un gaz liquide, en particulier de l'azote liquide, est utilisé en tant que bain froid (14).

5. Dispositif selon l'une des revendications précédentes, en outre avec un accumulateur vertical (51 à 60), pour stocker les pièces d'assemblage à sous-refroidir.

6. Dispositif selon l'une des revendications précédentes, en outre avec un dispositif (40), pour transporter des pièces d'assemblage (20), d'un accumulateur ou d'un magasin au récipient de refroidissement (12).

7. Dispositif selon la revendication 6, dans lequel le dispositif (40) de transport des pièces d'assemblage (20) présente une lance (40), à l'aide de laquelle les pièces d'assemblage (20) à sous-refroidir sont transportées en une position définie au-dessus du bain froid (14), et qui laisse tomber les pièces d'assemblage (20) à cette position définie dans le carquois (16).

8. Dispositif selon l'une des revendications précédentes, dans lequel le carquois (16) est fabriqué en carbone et/ou en GFK (matière synthétique composite, renforcée par des fibres).

9. Dispositif selon l'une des revendications précédentes, dans lequel les composants, prévus à l'intérieur du récipient (12) du dispositif pour enlever les pièces d'assemblage (20) sous-refroidies hors du carquois (16), sont réalisés en carbone et/ou en GFK(matière synthétique, composite, renforcée par des fibres de carbone).

10. Dispositif selon l'une des revendications précédentes, dans lequel le carquois (16) est configuré de manière qu'il puisse recevoir un jeu de pièces d'assemblage (20) à sous-refroidir.

11. Dispositif selon l'une des revendications précédentes, dans lequel le carquois (16) est configuré de manière qu'il puisse recevoir plusieurs jeux de pièces d'assemblage (20) se chevauchant temporellement, pour les sous-refroidir.

12. Dispositif selon l'une des revendications précédentes, pour lequel le carquois (16) est prévu sous la forme d'au moins une glissière en U.

13. Dispositif selon l'une des revendications 1 à 11, pour lequel le carquois (16) est configuré en forme de V.

14. Dispositif selon l'une des revendications précédentes, pour lequel le carquois (16) comprend des logements subdivisés (17), pour les différentes pièces d'assemblage (20) à sous-refroidir.

15. Dispositif selon l'une des revendications 2 à 14, dans lequel le dispositif de levage (18) est muni de broches (24), qui lèvent des pièces d'assemblage (20) ayant été sous-refroidies, en direction verticale, pour les sortir du carquois (16), et le carquois (16) dans sa zone inférieure présente des ouvertures permettant le passage de ces broches (24).

16. Procédé de sous-refroidissement de pièces d'assemblage, présentant les étapes ci-après :
- transport d'un jeu de pièces d'assemblage (20) à sous-refroidir, en une position d'entrée définie, d'un récipient (12) rempli au moins partiellement d'un bain froid (14),
- introduction des pièces d'assemblage (20) à sous-refroidir dans un carquois (16), prévu dans le récipient (12), au moins partiellement au-dessous de la surface du bain froid (14), et
- enlèvement des pièces d'assemblage (20) à sous-refroidir hors du carquois (16), à expiration d'un temps de séjour déterminé.

17. Procédé selon la revendication 16, dans lequel les pièces d'assemblage (20) à sous-refroidir sont introduites dans le bain froid (14), en les y laissant tomber.

18. Procédé selon la revendication 16 ou 17, dans lequel les pièces d'assemblage (20) sont transportées, au moyen d'une lance (40), en une position définie au-dessus du bain froid (14).

19. Procédé selon l'une des revendications de procédé précédentes, dans lequel les pièces d'assemblage à sous-refroidir sont préalablement prélevées d'un magasin vertical (51 à 60).

20. Procédé selon l'une des revendications de procédé précédentes, dans lequel les pièces d'assemblage (20) ayant été sous-refroidies sont levées du carquois (16) au moyen d'un dispositif de levage (18), jusqu'à atteinte d'une position située au-dessus du niveau de remplissage du bain froid (14) dans le récipient et, ensuite, à cette position, sont prises en charge au moyen d'un preneur (30) et sont transportées à un dispositif de montage.

21. Procédé selon l'une des revendications de procédé précédentes, dans lequel du gaz liquide, en particulier de l'azote liquide, est utilisé comme bain froid (14).

22. Procédé selon l'une des revendications de procédé précédentes, dans lequel le carquois (16) reçoit un jeu de pièces d'assemblage (20) pour effectuer le sous-refroidissement.

23. Procédé selon l'une des revendications de procédé précédentes, dans lequel le transport d'un jeu de pièces d'assemblage (20) à sous-refroidir, en une position d'entrée définie d'un récipient (12), rempli au moins partiellement d'un bain froid (14), l'introduction des pièces d'assemblage (20) à sous-refroidir dans un carquois (16) qui est prévue au moinx partiellement au-dessous de la surface du bain froid (14) dans le récipient (12), et l'enlèvement des pièces d'assemblage (20) à sous-refroidir hors du carquois (16), après expiration d'un temps de séjour déterminé, pour plusieurs jeux de pièces d'assemblage (20), sont effectués temporellement en chevauchement, faisant que le carquois (16) reçoit, pour effectuer le refroidissement, plusieurs jeux de pièces d'assemblage (20), en chevauchement temporel.
